# EUROPÄISCHE PATENTSCHRIFT

(11) **EP 3 315 273 B1**
(45) Veröffentlichungstag und Bekanntmachung des Hinweises auf die Patenterteilung: **05.06.2019**
(21) Anmeldenummer: 16400049.9
(22) Anmeldetag: 31.10.2016
(51) Int. Cl.: B27B 17/00, B25F 5/02, B25F 5/00

(54) **HANDGEFÜHRTES ARBEITSGERÄT**
MANUALLY OPERATED WORK DEVICE
APPAREIL DE TRAVAIL PORTATIF

(43) Veröffentlichungstag der Anmeldung: 02.05.2018
(73) Patentinhaber: Andreas Stihl AG & Co. KG, 71336 Waiblingen (DE)
(72) Erfinder: Schulz, Andreas, 76275 Ettlingen (DE); Zurek, Przemyslaw, 71522 Backnang (DE); Harer, Matthias, 71364 Winnenden (DE)
(74) Vertreter: Reinhardt, Annette

(56) Entgegenhaltungen:
- EP-A1- 2 746 008
- EP-A2- 1 901 602
- DE-A1- 4 407 432
- DE-A1-102007 021 633
- DE-U1-202010 007 114

## Beschreibung

Die Erfindung betrifft ein handgeführtes Arbeitsgerät der im Oberbegriff des Anspruchs 1 angegebenen Gattung.

Aus der DE 10 2007 021 633 A1 ist ein handgeführtes Arbeitsgerät bekannt, das einen Handgriff und ein Gehäuse, in dem der Verbrennungsmotor angeordnet ist, besitzt. Der Handgriff und das Gehäuse sind über einen Schwingspalt miteinander verbunden, der Relativbewegungen des Gehäuses gegenüber dem Handgriff zulässt. Am Handgriff ist eine Betätigungsvorrichtung, nämlich ein Gashebel, zur Betätigung eines Drosselelements in einem Vergaser angeordnet. Die Betätigungsbewegung, nämlich die Schwenkbewegung des Gashebels, wird über ein Übertragungselement zum Vergaser übertragen. Das Übertragungselement überträgt die Schwenkbewegung des Gashebels als Rotation um eine quer zum Schwingspalt liegende Rotationsachse.

Bei ungünstiger Lage des Vergasers und ungünstigen Relativbewegungen kann es aufgrund von Relativbewegungen des Handgriffs gegenüber dem Vergaser zu einer Verschiebung eines Kontaktbereichs kommen. In dem Kontaktbereich wirkt das Übertragungselement auf ein Betätigungselement am Vergaser, beispielsweise einen Drosselhebel: Diese Verschiebung kann trotz der Übertragung der Betätigungsbewegung über eine Rotation um eine quer zum Schwingspalt liegende Achse zu Betätigungen des Drosselelements führen. Die Betätigungen des Drosselelements können sich beispielsweise aufgrund von Führungs- und Vorschubkräften, die von einem Bediener über den Handgriff eingeleitet werden, sowie aufgrund von Vibrationen ergeben.

Aus der DE 20 2010 007 114 U1 ist es bereits bekannt, das Betätigungselement, auf das das Koppelelement wirkt, schwenkbar zu lagern. Um eine Anpassung der Betätigungscharakteristik zu ermöglichen, ist hier auch vorgesehen, dass das Betätigungselement eine Führungskulisse besitzt, auf die das Koppelelement wirkt.

Der Erfindung liegt die Aufgabe zugrunde, ein handgeführtes Arbeitsgerät der gattungsgemäßen Art zu schaffen, mit dem eine verbesserte Übertragung der Betätigungsbewegung auf das Drosselelement erreicht werden kann.

Diese Aufgabe wird durch ein handgeführtes Arbeitsgerät mit den Merkmalen des Anspruchs 1 gelöst.

Um eine gute Anpassung der Lage des Kontaktbereichs bezogen auf die Drehachse des Drosselelements zu erreichen, ist eine Führung für das Zwischenelement vorgesehen. Die Führung ändert die Lage des Kontaktbereichs gegenüber dem Gehäuse in Abhängigkeit der Drehstellung des Betätigungselements durch eine Änderung der Schwenklage des Zwischenelements gegenüber dem Gehäuse. Durch geeignete Gestaltung und Abstimmung der Führung auf die konstruktive Anordnung von Zwischenelement, Betätigungselement und Koppelelement kann eine gewünschte Übertragungscharakteristik auf einfache Weise eingestellt werden. Bevorzugt wird dabei eine weitgehende Entkopplung der Übertragungsbewegung von Relativbewegungen zwischen Gehäuse und Motor über den Schwingspalt erreicht.

Vorteilhaft ordnet die Führung jeder Position der Schwenkachse des Zwischenelements am Betätigungselement eine Drehlage des Zwischenelements um eine Schwenkachse zu.

Das Zwischenelement besitzt vorteilhaft einen seitlich auskragenden Abschnitt, wobei das Koppelelement an der der Schwenkachse des Zwischenelements zugewandten Seite des seitlich auskragenden Abschnitts anliegt. Das Koppelelement übt zur Betätigung des Betätigungselements bevorzugt eine Zugkraft auf das Zwischenelement aus, bewegt sich also zum Öffnen des Drosselelements von der Drehachse des Drosselelements weg. Vorteilhaft bewegt sich der seitlich auskragende Abschnitt bei einer Betätigung des Betätigungselements auch von der Drehachse des Drosselelements weg. Bei einer Lage des Vergasers zum Koppelelement, bei der sich der Kontaktbereich bei einer Betätigung des Betätigungselements, also bei der Öffnungsbewegung des Drosselelements, von der Drehachse des Drosselelements weg bewegt, ist eine Anpassung der Lage des Kontaktbereichs über eine Führung für das Zwischenelement besonders vorteilhaft.

Das Drosselelement ist um die Drehachse vorteilhaft zwischen einer ersten Endstellung und einer zweiten Endstellung schwenkbar gelagert. Bevorzugt ist die erste Endstellung die weitgehend öder vollständig geschlossene Stellung des Drosselelements, die dem Leerlauf zugeordnet ist. Die zweite Endstellung ist bevorzugt die weitgehend oder vollständig geöffnete Stellung, die der Volllast zugeordnet ist.

Vorteilhaft ist das Koppelelement drehbar gelagert. Besonders vorteilhaft ist das Koppelelement an einem fest mit dem Gehäuse des Drosselelements verbundenen Drehlager drehbar gelagert. Durch die Lagerung des Koppelelements an einem fest mit dem Gehäuse des Drosselelements verbundenen Drehlager lassen sich Relativbewegungen zwischen der Lagerstelle des Koppelelements und dem Gehäuse auf einfache Weise vermeiden. Bevorzugt ist das Drehlager unmittelbar am Gehäuse des Drosselelements oder an einem fest am Gehäuse fixierten Flansch ausgebildet. Dadurch lassen sich die zwischen der Lagerstelle und dem Drosselelement bestehenden Fertigungstoleranzen gering halten. Das Drehlager ist insbesondere integral am Gehäuse oder am Flansch ausgebildet. Eine einfache Gestaltung ergibt sich, wenn der Flansch aus Künststoff besteht. Bevorzugt ist eine Drehlageraufnahme für das Koppelelement integral am Flansch ausgebildet.

Die Lage des Drehlagers ist am Gehäuse fest vorgegeben, so dass Relativbewegungen zwischen Gehäuse und Handgriff nur zu Schwenkbewegungen des Koppelelements um das Drehlager führen können. Dadurch kann der Einfluss der Relativbewegungen auf die Betätigungsbewegung des Drosselelements minimiert werden.

Vorteilhaft ist die Führung eine Kulissenführung. Die Kulissenführung umfasst eine Kulissenbahn und einen in der Kulissenbahn geführten Kulissenzapfen. Durch geeignete Gestaltung der Kulissenbahn kann eine gewünschte Verschwenkcharakteristik des Zwischenelements gegenüber dem Betätigungselement erzielt werden. Die Kulissenbahn und der Kulissenzapfen bilden ein erstes und ein zweites Kulissenteil. Dabei kann die Kulissenbahn das erste Kulissenteil und der Kulissenzapfen das zweite Kulissenteil bilden. Alternativ kann der Kulissenzapfen das erste Kulissenteil und die Kulissenbahn das zweite Kulissenteil bilden. Das erste Kulissenteil ist vorteilhaft fest mit dem Gehäuse des Drosselelements verbunden. Das zweite Kulissenteil ist an dem Zwischenelement ausgebildet. Bevorzugt ist das erste, fest mit dem Gehäuse verbundene Kulissenteil der Kulissenzapfen und das zweite, an dem Zwischenelement ausgebildete Kulissenteil die Kulissenbahn. Es kann jedoch auch vorgesehen sein, dass der Kulissenzapfen an dem Zwischenelement ausgebildet ist und die Kulissenbahn fest mit dem Gehäuse verbunden ist.

Die Kulissenbahn ist vorteilhaft an mindestens einem Ende mindestens teilweise offen ausgebildet. An dem mindestens teilweise offenen Ende der Kulissenbahn ist der Kulissenzapfen vorteilhaft nicht geführt. Es kann jedoch vorteilhaft sein, die Kulissenbahn nur teilweise offen zu gestalten, so dass der Kulissenzapfen nicht aus der Kulissenbahn gelangen kann. An dem mindestens teilweise offenen Ende der Kulissenbahn besitzt die Kulissenbahn vorteilhaft eine Durchbrechung an einer die Kulissenbahn bildenden Umfangswand. Dadurch kann Schmutz, der sich im Betrieb an der Kulissenbahn ansammelt, vom Kulissenzapfen durch die Öffnung aus der Kulissenbahn gefördert werden. Bevorzugt ist das im Betrieb üblicherweise unten liegende Ende der Kulissenbahn mindestens teilweise offen ausgebildet, so dass Verschmutzungen auch aufgrund der Schwerkraft durch die Öffnung aus der Kulissenbahn fallen können.

Vorteilhaft weist der Kulissenzapfen in mindestens einer Endstellung des Drosselelements zum zugeordneten Ende der Kulissenbahn einen Abstand auf. Dadurch, dass der Kulissenzapfen sich nicht bis zum Ende der Kulissenbahn bewegen muss, können Toleranzen ausgeglichen werden. Ferner kann auch bei einer Verschmutzung der Kulissenbahn sichergestellt werden, dass das Drosselelement seine zugeordnete Endstellung erreicht und nicht von Verschmutzungen in der Kulissenbahn hieran gehindert wird. Bevorzugt ist das in üblicher Betriebsposition oben liegende Ende der Kulissenbahn so ausgeführt, dass es in der zugeordneten Endstellung des Drosselelements, in der der Kulissenzapfen diesem Ende der Kulissenbahn am nächsten liegt, einen Abstand zum Kulissenzapfen aufweist.

Um zu vermeiden, dass sich der Kulissenzapfen bei Vibrationen aus der Kulissenbahn lösen kann, ist vorgesehen, dass der Kulissenzapfen einen Sicherungsabschnitt aufweist. Der Sicherungsabschnitt hält den Kulissenzapfen in der Kulissenbahn. Bevorzugt hintergreift der Sicherungsabschnitt die Kulissenbahn mindestens an einer ersten Längsseite der Kulissenbahn und sichert die Kulissenbahn in Richtung der Schwenkachse des Zwischenelements an dem Kulissenzapfen. Um eine einfache Montage des Zwischenelements an dem Gehäuse zu ermöglichen und gleichzeitig eine gute Lagesicherung durch den Sicherungsabschnitt zu gewährleisten, ist vorgesehen, dass der Sicherungsabschnitt eine erste, lange Seite besitzt, deren Länge größer als die Breite der Kulissenbahn ist, und dass der Sicherungsabschnitt eine zweite, kurze Seite besitzt, deren Länge kleiner als die Breite der Kulissenbahn ist. Über die kurze Seite kann der Kulissenzapfen durch entsprechende Ausrichtung des Sicherungsabschnitts an dem Zwischenelement montiert werden. Um sicherzustellen, dass das Zwischenelement sich in keiner Stellung im Betrieb von dem Kulissenzapfen lösen kann, ist vorgesehen, dass die zweite Seite in keiner Stellung des Zwischenelements zwischen der ersten und der zweiten Endstellung des Drosselelements senkrecht zur Längsrichtung der Kulissenbahn ausgerichtet ist. Vorteilhaft ist die Breite der Kulissenbahn in jeder Stellung des Zwischenelements zwischen der ersten Endstellung und der zweiten Endstellung kleiner als die in gleicher Richtung gemessene Breite des Sicherungsabschnitts, so dass der Sicherungsabschnitt im Betrieb nicht durch die Kulissenbahn rutschen kann, sondern formschlüssig an der Kulissenbahn gesichert ist. Der Sicherungsabschnitt erstreckt sich dabei vorteilhaft nur auf einer Seite des Zwischenelements.

Die Kulissenbahn besitzt vorteilhaft eine zweite Längsseite. Der Kulissenzapfen ist demnach an beiden Seiten geführt. Der Kulissenzapfen ist zwischen den beiden Längsseiten der Kulissenbahn dabei vorteilhaft mit Spiel geführt. Dadurch wird eine Blockierung des Kulissenzapfens durch Verschmutzungen der Kulissenbahn vermieden. Vorteilhaft ist benachbart zur zweiten Längsseite der Kulissenbahn eine Erhebung an der Kulissenbahn angeordnet. Die Erhebung erhöht die Stabilität der Kulissenbahn und des gesamten Zwischenelements. An der zweiten Längsseite ist die Kulissenbahn bevorzugt nicht von einem Sicherungsabschnitt des Kulissenzapfens hintergriffen, so dass die Kulissenbahn an der zweiten Längsseite gegenüber der ersten Längsseite erhaben ausgebildet werden kann. Die Kulissenbahn besitzt demnach an der zweiten Längsseite eine größere, in Längsrichtung des Kulissenzapfens und quer zum Sicherungsabschnitt gemessene Breite als an der ersten Längsseite.

Vorteilhaft liegt der Kulissenzapfen an einer Berührlinie an der Kulissenbahn an. Die linienförmige Kontaktfläche zwischen dem Kulissenzapfen und der Kulissenbahn ist dabei bevorzugt in jeder Stellung des Kulissenzapfens gegeben. Die Berührlinie bezeichnet dabei die Linie, an der der Kulissenzapfen mit einer der Längsseiten der Kulissenbahn in Kontakt ist, wenn der Kulissenzapfen an einer der Längsseiten der Kulissenbahn anliegt. Beim Kontakt einer geraden Längsseite mit einem parallel geführten, flächigen Kulissenzapfen können Kulissenzapfen und Kulissenbahn an einer Berührfläche miteinander in Kontakt sein. Dadurch, dass nicht lediglich eine punktförmige Berührung gegeben ist, wird eine erhöhte Stabilität erreicht. Durch die linienförmige Berührung von Kulissenzapfen und Kulissenbahn werden Verschmutzungen gut in Längsrichtung der Kulissenbahn aus der Kulissenbahn gefördert.

Vorteilhaft ist das Zwischenelement nur in einer Lage am Betätigungselement einhängbar, die der zweiten Endstellung des Drosselelements zugeordnet ist. Die zweite Endstellung ist dabei die vollständig geöffnete Stellung des Drosselelements. Das Zwischenelement kann demnach am Betätigungselement nur in vollständig geöffneter Stellung des Drosselelements montiert oder demontiert werden. Üblicherweise ist das Drosselelement in Richtung auf seine erste Endstellung, also in Richtung auf die vollständig geschlossene Stellung, gefedert gelagert. Um das Drosselelement von der ersten in die zweite Endstellung zu verstellen, muss das Koppelelement am Zwischenelement eine Kraft, insbesondere eine Zugkraft, ausüben. In der zweiten Stellung steht die Einhängung des Zwischenelements am Betätigungselement demnach unter Spannung. In der unbetätigten, ersten Endstellung des Drosselelements wirkt keine Betätigungskraft über das Zwischenelement auf das Betätigungselement. Auch in einer Startstellung der Anordnung wirkt vorteilhaft keine Betätigungskraft über das Zwischenelement auf das Betätigungselement. Die Einhängung des Zwischenelements am Betätigungselement ist so gewählt, dass eine Einhängung oder Demontage nur in der zweiten Endstellung des Drosselelements möglich ist. Dadurch ist ein unbeabsichtigtes Aushängen des Zwischenelements vom Betätigungselement insbesondere im Bereich der ersten Endstellung des Drosselelements, wenn keine oder nur wenig Kraft über das Zwischenelement auf das Betätigungselement übertragen wird, vermieden.

Die erste Endstellung des Drosselelements ist vorteilhaft eine geschlossene Stellung des Drosselelements. Die erste Endstellung kann auch eine Startstellung des Drosselelements sein, in der das Drosselelement beispielsweise über einen Betriebsartensteller oder eine Rasteinrichtung gehalten sein kann. Das Zwischenelement besitzt vorteilhaft eine Sperrkontur, die in der ersten Endstellung des Drosselelements mit dem Betätigungselement zusammenwirkt Es hat sich gezeigt, dass das Zwischenelement im Betrieb aufgrund von Vibrationen zu Bewegungen angeregt werden kann. Eine solche Bewegung des Zwischenelements kann in ungünstigen Fällen eine Bewegung des Betätigungselements bewirken. Durch die Sperrkontur wird die Bewegung des Zwischenelements gegenüber dem Betätigungselement begrenzt, so dass insbesondere bei Vibrationen keine ungestörte Anregung des Zwischenelements mehr möglich ist. Dadurch kann vermieden werden, dass die Bewegungen des Zwischenelements aufgrund von Vibrationen so groß werden können, dass eine Übertragung der Bewegung auf das Betätigungselement erfolgt.

Ein Ausführungsbeispiel der Erfindung wird im Folgenden anhand der Zeichnung erläutert. Es zeigen:
- Fig. 1: eine schematische Darstellung einer Motorsäge,
- Fig. 2: eine Seitenansicht von Vergaser, Koppelelement und Gashebel der Motorsäge aus Fig. 1 in Leerlaufstellung,
- Fig. 3: eine ausschnittsweise perspektivische Darstellung der Anordnung aus Fig. 2,
- Fig. 4: eine schematische Darstellung der Anordnung von Gashebel und Koppelelement,
- Fig. 5: die Anordnung aus Fig. 2 bei vollständig geöffnetem Drosselelement, wobei der Gashebel und das Koppelelement in beiden Endstellungen gezeigt sind,
- Fig. 6: eine ausschnittsweise Schnittdarstellung durch das Zwischenelement in der Stellung aus Fig. 5,
- Fig. 7 und Fig. 8: die Anordnung aus Fig. 6 beim Aushängen und Demontieren des Zwischenelements,
- Fig. 9: einen Teilschnitt durch das Zwischenelement in der Anordnung aus Fig. 6,
- Fig. 10: eine vergrößerte ausschnittsweise Schnittdarstellung entlang der Linie X-X in Fig. 9,
- Fig. 11: eine Seitenansicht des Zwischenelements,
- Fig. 12: eine Seitenansicht in Richtung des Pfeils XII in Fig. 11,
- Fig. 13: eine Seitenansicht in Richtung des Pfeils XIII in Fig. 11,
- Fig. 14: eine Seitenansicht in Richtung des Pfeils XIV in Fig. 13,
- Fig. 15: eine Seitenansicht in Richtung des Pfeils XV in Fig. 11,
- Fig. 16: eine Seitenansicht in Richtung des Pfeils XVI in Fig. 11,
- Fig. 17: eine perspektivische Darstellung des Zwischenelements.

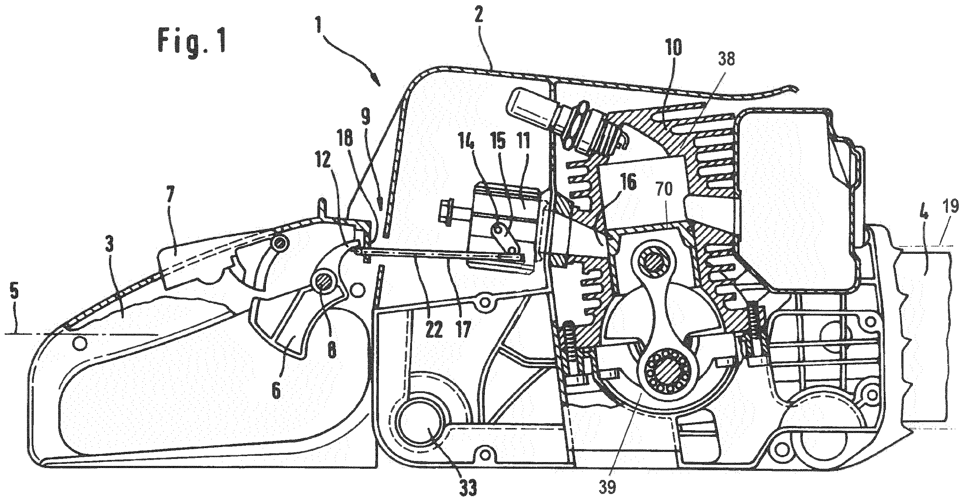

Fig. 1 zeigt als Ausführungsbeispiel für ein handgeführtes Arbeitsgerät eine Motorsäge 1. Das handgeführte, vorteilhaft handgetragene Arbeitsgerät kann jedoch auch ein anderes Arbeitsgerät wie beispielsweise ein Trennschleifer oder dergleichen sein. Die Erfindung ist vorteilhaft bei handgeführten Arbeitsgeräten einsetzbar, bei denen eine Betätigungsvorrichtung und ein Drosselelement über einen Schwingspalt voneinander getrennt sind, so dass im Betrieb Relativbewegungen zwischen der Betätigungsvorrichtung und dem Drosselelement auftreten können, die die Übertragung der Betätigungsbewegung der Betätigungsvorrichtung auf das Drosselelement verfälschen oder verändern können. Die Darstellung in Fig. 1 ist lediglich schematisch und verdeutlicht den generellen Aufbau der Motorsäge 1.

Die Motorsäge 1 besitzt ein Gehäuse 2, an dem ein Handgriff 3 festgelegt ist. Der Handgriff 3 ist über mehrere Antivibrationselemente 33 am Gehäuse 2 festgelegt, von denen in Fig. 1 eines schematisch gezeigt ist. Vorteilhaft ist der Handgriff 3 Teil eines Griffgehäuses, an dem auch weitere Komponenten der Motorsäge 1 wie beispielsweise ein Kraftstofftank oder dergleichen integriert sein können.

Im Ausführungsbeispiel ist der Handgriff 3 ein hinterer Handgriff. An der dem hinteren Handgriff 3 abgewandten Seite des Gehäuses 2 ragt eine Führungsschiene 4 nach vorne. An der Führungsschiene 4 ist das Werkzeug an der Motorsäge 1, nämlich eine schematisch gezeigte Sägekette 19, geführt. Die Sägekette 19 wird im Betrieb von einem Antriebsmotor 10 umlaufend an der Führungsschiene 4 angetrieben. Der Antriebsmotor 10 ist ein Verbrennungsmotor, vorteilhaft ein Zweitaktmotor oder ein gemischgeschmierter Viertaktmotor. Im Ausführungsbeispiel ist der Antriebsmotor 10 ein Zweitaktmotor. Der Antriebsmotor 10 ist dabei vorteilhaft ein Einzylindermotor. Der Antriebsmotor 10 saugt über einen Vergaser 11 Kraftstoff/Luft-Gemisch an, das über einen Einlass 16 in ein Kurbelgehäuse 39 zugeführt wird. Der Einlass 16 ist von einem Kolben 70 gesteuert. Der Kolben 70 ist hin- und hergehend in einem Zylinder 38 des Antriebsmotors 10 gelagert. Im Vergaser 11 ist ein in Fig. 1 nicht gezeigtes Drosselelement mit einer Drosselwelle 14 schwenkbar gelagert. An der Drosselwelle 14 ist ein Betätigungselement 15 festgelegt. Bevorzugt ist das Betätigungselement 15 drehfest an der Drosselwelle 14 angeordnet.

Am Handgriff 3 ist eine Betätigungsvorrichtung, nämlich ein Gashebel 6, mit einem Schwenklager 8 schwenkbar gelagert. Am Handgriff 3 ist außerdem eine Gashebelsperre 7 gelagert. Die Betätigungsbewegung des Gashebels 6, im Ausführungsbeispiel die Schwenkbewegung des Gashebels 6, wird über ein Koppelelement 17 auf das Betätigungselement 15 am Vergaser 11 übertragen. Zwischen dem Handgriff 3 und dem Gehäuse 2 ist ein Schwingspalt 9 gebildet, der von den Antivibrationselementen 33 überbrückt ist. Aufgrund des Schwingspalts 9 können der Handgriff 3 und das Gehäuse 2 im Betrieb Relativbewegungen zueinander ausführen. Dadurch ist der Handgriff 3 vom Antriebsmotor 10 schwingungsentkoppelt. Um trotz der möglichen Relativbewegungen eine gute Übertragung der Betätigungsbewegung des Gashebels 6 auf das Betätigungselement 15 und das Drosselelement zu erreichen, überträgt das Koppelelement 17 die Betätigungsbewegung des Gashebels 6 als Rotationsbewegung um eine quer zum Schwingspalt 9 liegende Rotationsachse 22. Im Ausführungsbeispiel fällt die Rotationsachse 22 mit der Längsmittelachse des Koppelelements 17 in dem den Schwingspalt 9 überbrückenden Bereich zusammen.

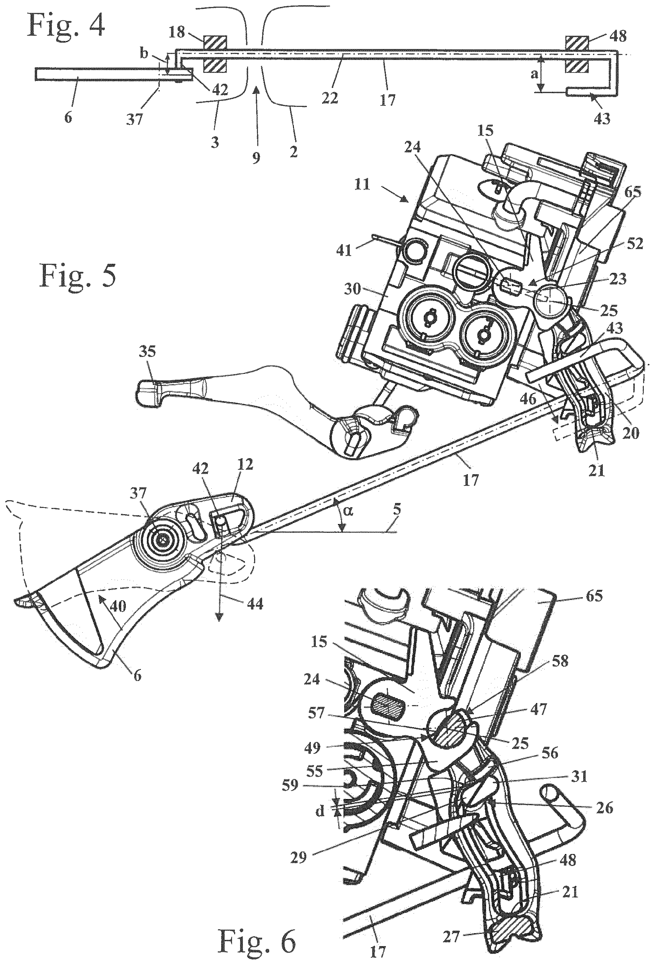

Die Motorsäge 1 besitzt eine Längsachse 5, die sich parallel zur Ebene der Führungsschiene 4 in Längsrichtung der Motorsäge 1 erstreckt. Im Ausführungsbeispiel verläuft das Koppelelement 17 in einem Winkel α (Fig. 5) von weniger als 45° geneigt zur Längsachse 5, insbesondere näherungsweise parallel zur Längsachse 5. Vorteilhaft schließt die Längsachse des Koppelelements 17, insbesondere die Rotationsachse 22, mit der Längsachse 5 nur einen geringen Winkel α ein, der vorteilhaft weniger als 30°, insbesondere weniger als 20° beträgt. Wie Fig. 1 auch zeigt, besitzt der Gashebel 6 einen Betätigungsarm 12, mit dem er auf das Koppelelement 17 wirkt. Unmittelbar benachbart zum Betätigungsarm 12 ist das Koppelelement 17 an einem ersten Drehlager 18 schwenkbar am Handgriff 3 gelagert.

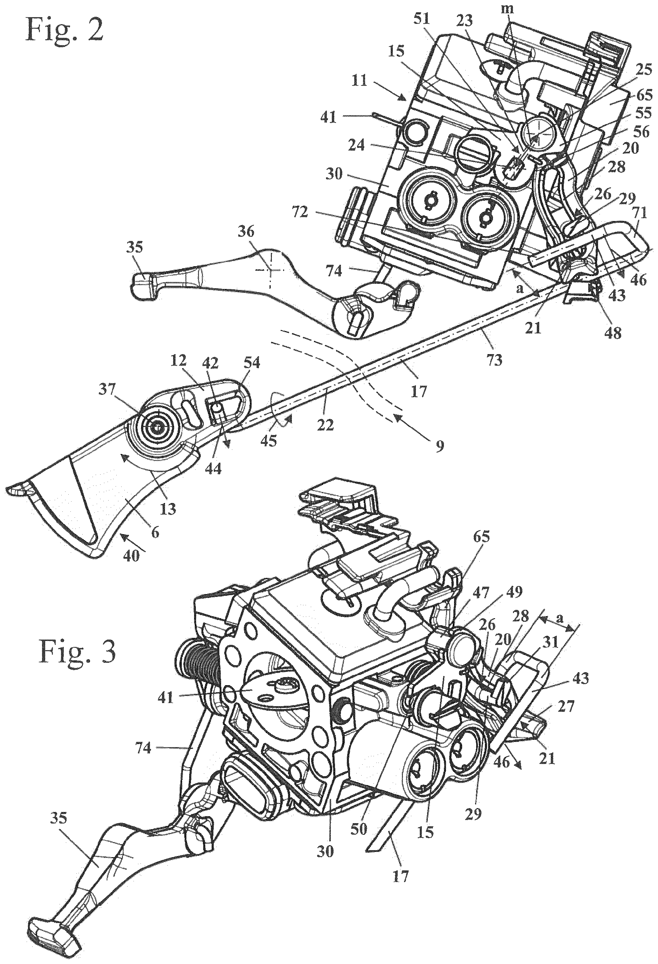

Wie Fig. 2 zeigt, ist das Koppelelement 17 im Bereich des Vergasers 11 an einem zweiten Drehlager 48 schwenkbar gelagert. Das zweite Drehlager 48 ist mit einem Gehäuse 30 des Vergasers 11 verbunden. Das erste Drehlager 18 ist in Fig. 2 nicht gezeigt. In Fig. 2 ist auch die Lage des Schwingspalts 9 schematisch dargestellt.

Der Gashebel 6 ist an einer Schwenkachse 37 schwenkbar gelagert und in Richtung auf die in Fig. 2 gezeigte Leerlaufstellung federbelastet. Der Betätigungsarm 12 besitzt im Ausführungsbeispiel eine Öffnung 54, in der ein Betätigungsabschnitt 42 des Koppelelements 17 eingehängt ist. Das Koppelelement 17 besitzt im Bereich des Vergasers 11 einen Kontaktabschnitt 43, der mit einem Zwischenelement 20 zusammenwirkt. Das Zwischenelement 20 ist am Betätigungselement 15 um eine Schwenkachse 25 schwenkbar gelagert. Die Schwenkachse 25 besitzt dabei zu einer Drehachse 24 eines Drosselelements 23 einen Abstand m. Das Drosselelement 23 ist in einem Ansaugkanal des Antriebsmotors 10 angeordnet und dient zur Steuerung der dem Antriebsmotor 10 zugeführten Menge an Verbrennungsluft. Ist das Drosselelement 23 wie im Ausführungsbeispiel in einem Vergaser 11 angeordnet, so wird über das Drosselelement 23 auch die dem Antriebsmotor 10 zugeführte Menge an Kraftstoff gesteuert, da das Drosselelement 23 den Unterdruck im Ansaugkanal und damit die Menge an angesaugtem Kraftstoff beeinflusst. Es kann jedoch auch vorgesehen sein, dass das Drosselelement 23 in einem Drosselgehäuse angeordnet ist und dass die Zufuhr von Kraftstoff an anderer Stelle, beispielsweise unmittelbar in den Ansaugkanal, in das Kurbelgehäuse 39 oder in den Zylinder 38 des Antriebsmotors 10 erfolgt.

In der in Fig. 2 gezeigten Leerlaufstellung befindet sich das Drosselelement 23, im Ausführungsbeispiel eine Drosselklappe, in einer ersten Endstellung 51. In der ersten Endstellung 51 verschließt das Drosselelement 23 den Strömungsquerschnitt im Ansaugkanal weitgehend. In der ersten Endstellung 51 ergibt sich der geringste freie Strömungsquerschnitt im Ansaugkanal. Wie Fig. 2 auch zeigt, ist stromauf des Drosselelements 23 ein Chokeelement 41 gelagert. In Leerlaufstellung ist das Chokeelement 41 vollständig geöffnet. Das Chokeelement 41 gibt den Strömungsquerschnitt in seiner vollständig geöffneten Stellung weitgehend frei. Die Motorsäge 1 besitzt einen Betriebsartensteller 35, der um eine Schwenkachse 36 schwenkbar am Gehäuse 2 (Fig. 1) gelagert ist. Der Betriebsartensteller 35 dient zur Einstellung von mindestens einer Startstellung und wirkt über eine Betätigungsstange 74 auf das Chokeelement 41. Vorteilhaft wirkt der Betriebsartensteller 35 auch auf das Drosselelement 23 und stellt das Drosselelement 23 und das Chokeelement 41 in für den Anwerfvorgang des Antriebsmotors 10 günstige Startstellungen.

Wenn der Bediener den Gashebel 6 zum Öffnen des Drosselelements 23 in Richtung des Pfeils 40 betätigt, verschwenkt der Gashebel 6 um die Schwenkachse 37, wie durch den Pfeil 13 angedeutet ist. Dabei bewegt sich der Betätigungsarm 12 und damit auch der in der Öffnung 54 angeordnete Betätigungsabschnitt 42 in Richtung des Pfeils 44. Im Ausführungsbeispiel verlaufen die Pfeile 40 und 44 in Gegenrichtung zueinander. Der Betätigungsabschnitt 42 ist als seitlich von der Schwenkachse 22 des Koppelelements 17 auskragender Arm ausgebildet. Die Bewegung des Betätigungsabschnitts 42 in Richtung des Pfeils 44, die durch die Schwenkbewegung des Gashebels 6 in Richtung des Pfeils 13 hervorgerufen wird, bewirkt dadurch eine Rotation des Koppelelements 17 um die Rotationsachse 22 in Richtung des Pfeils 45. Der Kontaktabschnitt 43 ist an einem ersten Endabschnitt 72 angeordnet, der mit einem geraden Überbrückungsabschnitt 73 über einen Verbindungsabschnitt 17 verbunden ist. Im Ausführungsbeispiel ist die Rotationsachse 22 die Längsmittelachse des Überbrückungsabschnitts 73. Der erste Endabschnitt 72 verläuft im Ausführungsbeispiel parallel zum Überbrückungsabschnitt 73 in einem Abstand a zum Überbrückungsabschnitt 73. Auch der Kontaktabschnitt 43 besitzt zur Rotationsachse 22 den Abstand a. Die Rotation des Koppelelements 17 bewirkt dadurch eine Bewegung des Kontaktabschnitts 43 in Richtung des Pfeils 46.

Im Ausführungsbeispiel ragen der Betätigungsabschnitt 42 und ein zweiter Endabschnitt 71, der den Kontaktabschnitt 43 trägt, näherungsweise in die gleiche radiale Richtung bezogen auf die Rotationsachse 22, so dass der Betätigungsabschnitt 42 und der zweite Endabschnitt 71 mit dem Kontaktabschnitt 43 sich in die gleiche Richtung bewegen. Auch eine gegenläufige Bewegung von Betätigungsabschnitt 42 und zweitem Endabschnitt 71 bzw. Kontaktabschnitt 43 kann jedoch vorteilhaft sein.

Wie Fig. 2 zeigt, besitzt der Kontaktabschnitt 43 in Leerlaufstellung zu einem Kontaktbereich 21 des Zwischenelements 20 einen geringfügigen Abstand. Dadurch können Toleranzen ausgeglichen werden. Der Kontaktbereich 21 ist der Bereich des Zwischenelements 20, an dem der Kontaktabschnitt 43 bei einer Betätigungsbewegung zur Anlage kommt. Die Betätigungsbewegung erfolgt vorteilhaft von der ersten Endstellung 51 bis zur einer zweiten Endstellung 52, die der vollständig geöffneten Stellung des Drosselelements 23 zugeordnet ist. Dabei können bei der Betätigungsbewegung von der ersten Endstellung 51 zur zweiten Endstellung 51 Zwischenstellungen eingenommen werden. Der tatsächliche Anlagebereich, in dem der Kontaktabschnitt 43 mit dem Zwischenelement 20 in einer Position in Kontakt ist, kann dabei kleiner als der Kontaktbereich 21 sein und sich bei der Betätigungsbewegung innerhalb des Kontaktbereichs 21 bewegen. Wenn der Bediener eine höhere Drehzahl als die Leerlaufdrehzahl einstellen möchte und hierzu den Gashebel 6 verschwenkt, liegt nach Überwinden eines Leerwegs der Kontaktabschnitt 43 am Kontaktbereich 21 an. Der Leerweg kann insbesondere dazu dienen, Toleranzen auszugleichen. Bei bereits betätigter Gashebelsperre 7 (Fig. 1) und ungewolltem Gasgeben wird durch den Leerweg eine unmittelbare Betätigung des Zwischenelements 20 vermieden. Eine weitere Verschwenkung des Gashebels 6 in Richtung des Pfeils 40 bewirkt, dass der Kontaktabschnitt 43 auf den Kontaktbereich 21 wirkt und dadurch eine Zugkraft am Zwischenelement 20 ausübt. Die Zugbewegung wirkt dabei in Richtung des Pfeils 46 in Fig. 2. Aufgrund des Abstands m der Schwenkachse 25 des Zwischenelements 20 zur Drehachse 24 des Drosselelements 23 bewirkt die Bewegung des Zwischenelements 20 eine Drehung des Betätigungselements 15 um die Drehachse 24. Durch die Bewegung des Zwischenelements 20 wird ein Öffnen des Drosselelements 23 aus seiner ersten Endstellung 51 in Richtung auf seine zweite Endstellung 52 bewirkt.

Wie Fig. 2 auch zeigt, besitzt das Zwischenelement 20 benachbart zum Betätigungselement 15 eine Sperrkontur 56. Die Sperrkontur 56 liegt in Leerlaufstellung und einer Startstellung vorteilhaft unmittelbar benachbart zu einer Nase 55 des Betätigungselements 15. Die Sperrkontur 56 begrenzt zusammen mit der Nase 55 den Weg, um den sich das Zwischenelement 20 in einer Richtung vom Kontaktbereich 21 zur Schwenkachse 25 gegenüber dem Betätigungselement 15 bewegen kann. Im Betrieb kann das Zwischenelement 20 aufgrund von Vibrationen zu Bewegungen gegenüber dem Betätigungselement 15 angeregt werden. Diese Relativbewegungen werden durch die Sperrkontur 56 und die Nase 55 begrenzt. Dadurch wird verhindert, dass die Bewegungen des Zwischenelements 20 so groß werden, dass das Zwischenelement 20 das Betätigungselement 15 betätigen und verstellen kann.

Die Position des Kontaktbereichs 21 des Zwischenelements 20 ist durch die Lage der Schwenkachse 25 am Betätigungselement 15 sowie durch eine Führung 26 vorgegeben. Die Führung 26 ist im Ausführungsbeispiel als Kulissenführung ausgebildet und umfasst einen Kulissenzapfen 29, der an einem fest mit dem Gehäuse 30 des Vergasers 11 verbundenen Flansch 65 fixiert ist. Der Kulissenzapfen 29 kann vorteilhaft auch unmittelbar am Gehäuse 30 des Vergasers 11 festgelegt sein. Die Führung 26 umfasst außerdem eine Kulissenbahn 28, die im Ausführungsbeispiel am Zwischenelement 20 ausgebildet ist. Es kann jedoch auch vorgesehen sein, dass der Kulissenzapfen 29 am Zwischenelement 20 und die Kulissenbahn 28 am Gehäuse 30 oder am Flansch 65 ausgebildet ist. Der Kulissenzapfen 29 ist in jeder Stellung des Drosselelements 23 in einem Abstand zur Schwenkachse 25 des Zwischenelements 20 angeordnet. Durch die Gestaltung der Kulissenbahn 28 ist dadurch in Verbindung mit der Position der Schwenkachse 25 die Schwenklage des Zwischenelements 20 gegenüber dem Gehäuse 30 festgelegt. Durch entsprechende Gestaltung der Kulissenbahn 28 kann die Position des Kontaktbereichs 21 eingestellt werden, wie im Folgenden noch näher beschrieben wird.

Wie Fig. 3 zeigt, besitzt das Zwischenelement 20 einen Lagerzapfen 47, der in einer Aufnahme 49 des Betätigungselements 15 eingehängt ist. Die Aufnahme 49 ist an ihrem Umfang teilweise offen, so dass der Lagerzapfen 47 am Betätigungselement 15 montiert und von diesem demontiert werden kann, wie im Folgenden noch näher beschrieben wird. Wie Fig. 3 auch zeigt, besitzt der Kulissenzapfen 29 einen Sicherungsabschnitt 31, der das Zwischenelement 20 an einer Seite der Kulissenbahn 28 hintergreift und dadurch in Längsrichtung des Kulissenzapfens 29 gegenüber dem Gehäuse 30 und dem Flansch 65 sichert. Der Sicherungsabschnitt 31 verhindert, dass sich das Zwischenelement 20 in Längsrichtung des Kulissenzapfens 29 vom Gehäuse 30 weg bewegen kann.

Wie Fig. 3 auch zeigt, besitzt das Zwischenelement 20 an dem dem Lagerzapfen 47 abgewandten Ende einen seitlich auskragenden Abschnitt 27, an dem der Kontaktbereich 21 ausgebildet ist. Der Kontaktbereich 21 ist dabei an der der Schwenkachse 25 (Fig. 2) zugewandten Seite des Abschnitts 27 angeordnet.

Die erste Endstellung 51 des Drosselelements 23, die in Fig. 2 gezeigt ist, wird durch einen Leerlaufanschlag 50 festgelegt, der in Fig. 3 gezeigt ist. Der Leerlaufanschlag 50 ist vorteilhaft an einem konischen Abschnitt einer Schraube ausgebildet. Die Einschraubtiefe der Schraube bestimmt aufgrund der Konizität des Anschlags 50 die erste Endstellung 51 des Drosselelements 23.

Fig. 4 zeigt schematisch die Gestaltung des Koppelelements 17. Der Gashebel 6 wirkt in einem Abstand b zur Rotationsachse 22 auf den Betätigungsabschnitt 42. Bei einer Verschwenkung des Gashebels 6 wird dadurch eine Rotationsbewegung des Koppelelements 17 um die Rotationsachse 22 bewirkt. Der Kontaktabschnitt 43 besitzt einen Abstand a zur Schwenkachse 22. Je nach Auslegung des Verhältnisses der Abstände a und b kann am Kontaktabschnitt 43 eine kleinere oder eine größere Bewegung erzeugt werden als am Betätigungsabschnitt 42. Im Ausführungsbeispiel ist der Abstand a größer als der Abstand b.

Fig. 5 zeigt die Anordnung bei vollständig geöffnetem Drosselelement 23. Das Drosselelement 23 befindet sich in seiner zweiten Endstellung 52, die der Volllaststellung zugeordnet ist. Um das Zwischenelement 20, das Betätigungselement 15 und das Drosselelement 23 in diese Stellung zu verstellen, wird der Gashebel 6 aus der in Fig. 5 mit durchgezogener Linie gezeigten Position in Richtung des Pfeils 40 in die in Fig. 5 mit gestrichelter Linie gezeigte Position verschwenkt. Dabei bewegt sich der Betätigungsabschnitt 42 in Richtung des Pfeils 44. Gleichzeitig wird der Kontaktabschnitt 43 aus der mit durchgezogener Linie gezeigten Position in Richtung des Pfeils 46 in die mit gestrichelter Linie gezeigte Position verstellt. Dabei drückt der Kontaktabschnitt 43 auf den Kontaktbereich 21 und verschiebt das Zwischenelement 20. Das Zwischenelement 20 übt am Betätigungselement 15 eine Zugkraft aus, die die Federkraft, mit der das Betätigungselement 15 in Richtung auf die Leerlaufstellung vorgespannt ist, überwindet und das Betätigungselement 15 verschwenkt und dabei das Drosselelement 23 öffnet. Im Ausführungsbeispiel ist das Betätigungselement 15 drehfest mit der Drosselwelle 14 verbunden. Es kann jedoch auch vorgesehen sein, dass das Betätigungselement 15 drehbar und insbesondere über eine Feder mit der Drosselwelle 14 verbunden ist. Eine solche gefederte Verbindung zwischen Betätigungselement 15 und Drosselwelle 14 bzw. Drosselelement 23 kann insbesondere zum Toleranzausgleich vorgesehen sein.

In Leerlaufstellung, in der sich das Drosselelement 23 in seiner ersten Endstellung 51 (Fig. 2) befindet, liegt das Zwischenelement 20 an der Führung 26 und an der Einhängung am Betätigungselement 15 an. Über das Zwischenelement 20 werden keine Kräfte übertragen.

Für die Montage des Zwischenelements 20 ist vorgesehen, dass das Zwischenelement 20 nur dann am Betätigungselement 15 einhängbar oder vom Betätigungselement 15 zu demontieren ist, wenn sich das Betätigungselement 15 und das Zwischenelement 20 in der Lage befinden, die der zweiten Endstellung 52 des Drosselelements 23 zugeordnet ist. Diese Lage ist in Fig. 5 gezeigt. Im üblichen Betrieb drückt in dieser Lage der Kontaktabschnitt 43 auf den Kontaktbereich 21 des Zwischenelements 20, und das Zwischenelement 20 zieht am Betätigungselement 15, um das Drosselelement 23 in seiner Lage zu halten. Ein versehentliches Lösen des Zwischenelements 20 vom Betätigungselement 15 ist in dieser Lage aufgrund der über die Anordnung übertragenen Kräfte nicht möglich. Um das Zwischenelement 20 vom Betätigungselement 15 zu lösen, muss das Drosselelement 23 in seiner vollständig geöffneten Stellung, also der zweiten Endstellung 52, gehalten werden. Gleichzeitig muss der Gashebel 6 losgelassen werden, so dass der Kontaktabschnitt 43 nicht am Kontaktbereich 21 anliegt und über das Zwischenelement 20 keine Kräfte übertragen werden. Dies ist die in Fig. 5 mit durchgezogener Linie gezeigte Stellung.

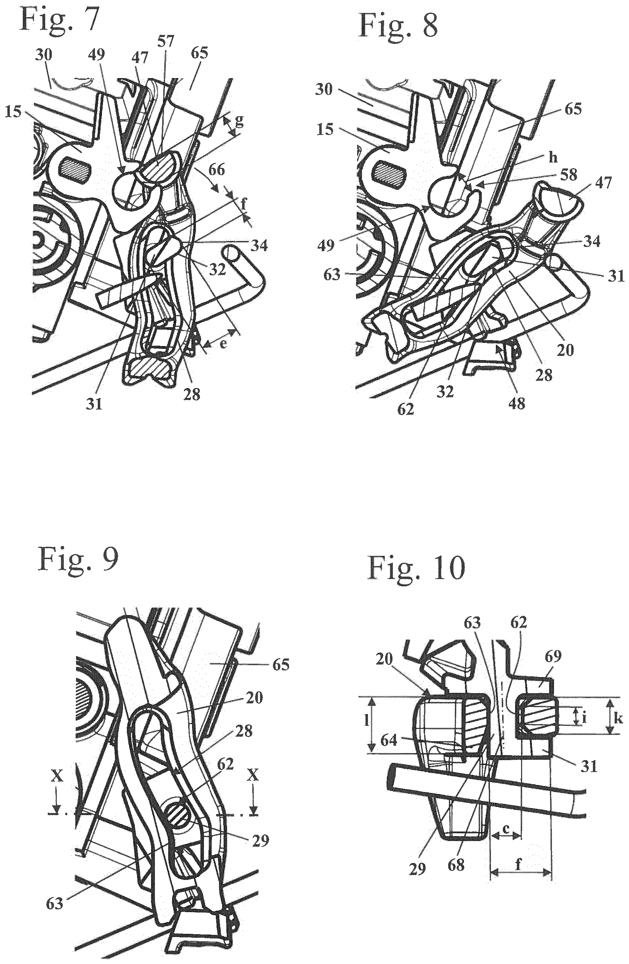

Wie die Schnittdarstellung in Fig. 6 zeigt, besitzt der Lagerzapfen 47 des Zwischenelements 20 eine Abflachung 57 an dem ansonsten kreisförmigen Querschnitt. Die Aufnahme 49 besitzt eine Öffnung 58, die an einer dem Kontaktbereich 21 abgewandten Seite der Aufnahme 49 angeordnet ist. Im Betrieb wird das Zwischenelement 20 dadurch aufgrund der über das Zwischenelement 20 auf das Betätigungselement 15 übertragenen Kräfte von der Öffnung 58 weg in die Aufnahme 49 gedrückt. Aus dieser Stellung kann das Zwischenelement 20, wie in den Fig. 7 und 8 gezeigt, mit seinen Lagerzapfen 47 durch die Öffnung 58 bewegt werden. An der Abflachung 57 besitzt der Lagerzapfen 47 eine kleinste Breite g, die geringfügig kleiner als die Breite der Öffnung 58 ist. Der größte Durchmesser des Lagerzapfens 47 ist jedoch größer als die Breite der Öffnung 58, so dass ein Aushängen des Zwischenelements 20 nur in der in den Fig. 6 bis 8 gezeigten Position möglich ist.

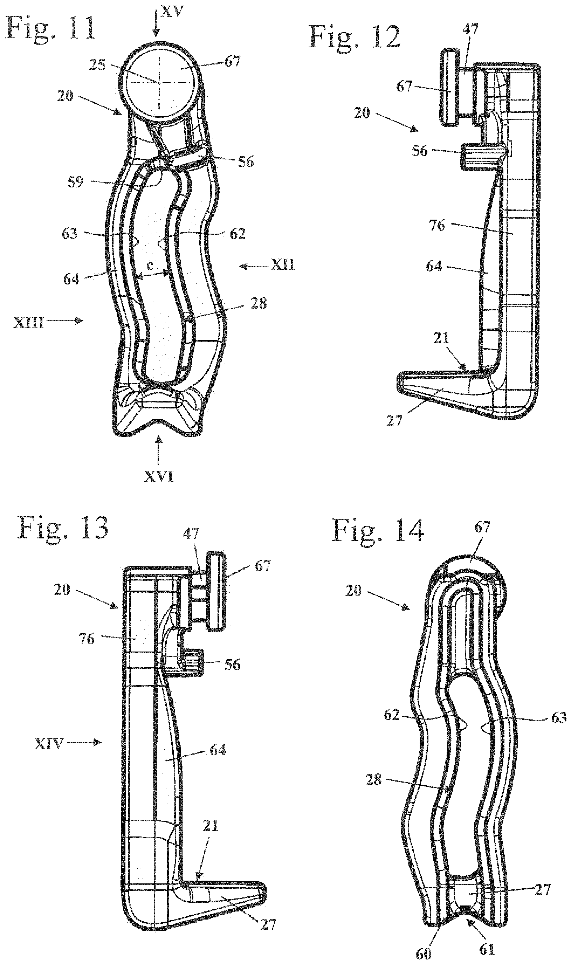

Wie Fig. 7 zeigt, besitzt der Sicherungsabschnitt 31 eine lange Seite 32, die eine Länge e besitzt, sowie eine kurze Seite 34, die eine Länge f besitzt. Die Länge f ist deutlich kleiner als die Länge e. Die Länge e ist größer als die in Fig. 11 gezeigte Breite c der Kulissenbahn 28. Solange die lange Seite 32 quer zur Längsrichtung der Kulissenbahn 28 liegt, kann das Zwischenelement 20 deshalb nicht vom Kulissenzapfen 29 ausgehängt werden. Um das Zwischenelement 20 vollständig zu demontieren, muss das Zwischenelement 20, wie in Fig. 7 durch den Pfeil 66 gezeigt, verschwenkt werden, bis die lange Seite 32 parallel zur Längsrichtung der Kulissenbahn 28 liegt. Diese Stellung ist in Fig. 8 gezeigt. In dieser Position des Zwischenelements 20 liegen die beiden langen Seiten 32 des Sicherungsabschnitts 31 jeweils etwa parallel zu Längsseiten 62 und 63 der Kulissenbahn 28. Die Länge f der kurzen Seite 34 ist kleiner als die Breite c der Kulissenbahn 28. Die kurze Seite 34 ist parallel zur Breite c der Kulissenbahn 28 ausgerichtet. In dieser Position kann das Zwischenelement 20 vom Kulissenzapfen 29 in Richtung vom Gehäuse 30 des Vergasers 11 weg abgenommen werden. In Fig. 8 ist auch die Breite h der Öffnung 58 gezeigt, die nur geringfügig größer als die kleinste Breite g des Lagerzapfens 47 ist.

Wie Fig. 6 zeigt, besitzt der Kulissenzapfen 29 in der Endstellung 52 des Drosselelements 23 zum ersten Ende 59 der Kulissenbahn 28 einen Abstand d. Der Abstand d kann vergleichsweise klein sein und beispielsweise 0,5 mm bis 10 mm, insbesondere 1 mm bis 5 mm betragen. Dadurch, dass in der zweiten Endstellung 52 zwischen dem Kulissenzapfen 29 und dem ersten Ende 59 der Kulissenbahn 28 der Abstand d gebildet ist, können Verschmutzungen der Kulissenbahn 28 aus dem Bewegungsbereich des Kulissenzapfens 29 in der Kulissenbahn 29 gedrückt werden. Auch bei Verschmutzungen kann das Drosselelement 23 seine zweite Endstellung 52 erreichen. In der zweiten Endstellung 52 besitzt der Kulissenzapfen 29 den geringsten Abstand d zum ersten Ende 59.

Die Fig. 5 bis 8 zeigen Seitenansichten in Richtung der Drehachse 24 des Drosselelements 23. Wie Fig. 6 zeigt, beschreibt die Kulissenbahn 28 (Fig. 7) einen Bogen, der gegenläufig zu dem Bogen ist, den die Aufnahme 49 bei der Betätigungsbewegung um die Drehachse 24 des Drosselelements 23 beschreibt. Bewegt sich das Koppelelement 17 im Betrieb aufgrund von Vibrationen und/oder aufgrund von den im Betrieb an der Motorsäge 1 wirkenden Kräften, so ergibt sich dadurch keine bzw. keine zusätzliche Betätigungsbewegung am Zwischenelement 20. Bei einer Bewegung des Gashebels 6 in der Darstellung in Fig. 5 gegenüber dem Vergaser 11 nach oben oder unten durch eine entsprechende Bewegung des Handgriffs 3 (Fig. 1) bewegt sich das Koppelelement 17 in Längsrichtung des zweiten Drehlagers 48 und/ oder quer zur Rotationsachse 22 (Fig. 2) um das zweite Drehlager 48. Auch seitliche Relativbewegungen von Handgriff 3 und Vergaser 11 sind möglich, ohne dass hierdurch das Zwischenelement 22 zusätzlich betätigt wird. Aufgrund der Ausrichtung des Kontaktbereichs 21 wird ein gutes Übertragungsverhalten der Betätigungsbewegung des Gashebels 6 auf das Drosselelement 23 erreicht. Wie Fig. 6 auch zeigt, verläuft die Sperrkontur 56 im Ausführungsbeispiel bogenförmig, insbesondere kreisbogenförmig um die Schwenkachse 25 des Zwischenelements 20.

Die Fig. 9 und 10 zeigen die Anordnung des Kulissenzapfens 29 in der Kulissenbahn 28.Wie Fig. 9 zeigt, besitzt der Kulissenzapfen 29 zwischen den Längsseiten 62 und 63 der Kulissenbahn 28 Spiel. Die Längsseiten 62 und 63 sind dabei die Seiten der Kulissenbahn 28, zwischen denen der Kulissenzapfen 29 geführt ist. Wie Fig. 10 zeigt, liegt der Kulissenzapfen 29 über eine linienförmige Kontaktfläche an einer der Längsseiten 62 oder 63 an. Dies ergibt sich durch den kreisförmigen Querschnitt des Kulissenzapfens 29 und die Breite i der Längsseiten 62 und 63. Die Breite i ist parallel zur Längsmittelachse 68 des Kulissenzapfens 29 gemessen. Die Längsseiten 62 und 63 verlaufen in dem Bereich, der die Breite i besitzt, parallel zur Längsmittelachse 68 des Kulissenzapfens 29. Bevorzugt beträgt die Breite i mindestens 0,5 mm und höchstens 4 mm, insbesondere mindestens 1 mm und höchstens 3 mm, bevorzugt mindestens 2 mm. Eine Breite i der Längsseiten 62 und 63 von höchstens 4 mm ermöglicht ein gutes Entfernen von Verschmutzungen aus der Kulissenbahn 28 durch den Kulissenzapfen 29. Eine Breite i von mindestens 0,5 mm, insbesondere mindestens 1 mm gewährleistet gute Führungseigenschaften. Wie Fig. 10 auch zeigt, ragt an der Längsseite 63 an der dem Sicherungsabschnitt 31 zugewandten Seite eine Erhebung 64 auf die dem Gehäuse 30 (Fig. 5) abgewandte Seite. An der Längsseite 63 besitzt das Zwischenelement 20 eine Breite 1, die deutlich größer als die Breite k an der Längsseite 62 ist. Die Breite 1 und die Breite k sind dabei in der gleichen Richtung gemessen. Die Erhebung 64 ragt im Ausführungsbeispiel ausschließlich auf die dem Gehäuse 30 des Vergasers 11 abgewandte Seite. Auch eine andere Gestaltung der Erhebung 64 kann vorteilhaft sein. Wie Fig. 10 auch zeigt, liegt das Zwischenelement 20 an der dem Gehäuse 30 (Fig. 8) zugewandten Seite an einer Anlage 69 an, die einteilig mit dem Flansch 65 ausgebildet ist.

Die Fig. 11 bis 17 zeigen die Gestaltung des Zwischenelements 20 im Einzelnen. In Fig. 11 ist der bogenförmige Verlauf der Sperrkontur 56 gezeigt. Wie Fig. 11 außerdem zeigt, verlaufen die Längsseiten 62 und 63 der Kulissenbahn 28 in konstantem Abstand c zueinander. Das erste Ende 59 der Kulissenbahn 28 ist das der Schwenkachse 25 zugewandte Ende. Wie die Fig. 11 und 12 zeigen, besitzt der Lagerzapfen 47 einen Kopf 67 mit vergrößertem Außendurchmesser. Der Kopf 67 ist an der dem Gehäuse 30 abgewandten Seite des Lagerzapfens 47 angeordnet und sichert die Lage des Zwischenelements 20 am Betätigungselement 15 in Richtung der Schwenkachse 25.

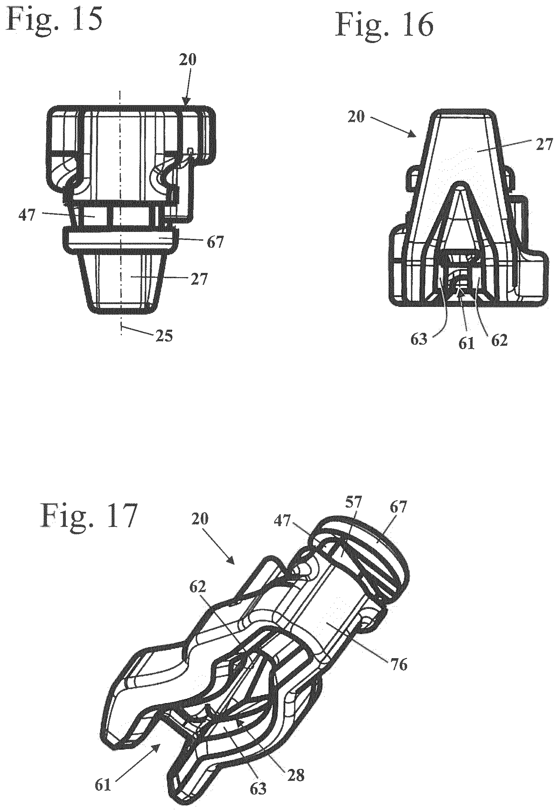

In den Fig. 12 und 13 ist auch die Erhebung 64 zu erkennen. Wie die Fig. 12 und 13 zeigen, vergrößert sich die Breite der Erhebung 64 an dem dem Lagerzapfen 47 zugewandten Ende mit zunehmendem Abstand vom Lagerzapfen 47. Wie Fig. 14 zeigt, besitzt die Kulissenbahn 28 ein zweites Ende 60, das der Schwenkachse 25 (Fig. 11) abgewandt liegt. Wie auch Fig. 16 zeigt, ist die Kulissenbahn 28 zum zweiten Ende 60 (Fig. 14) hin mindestens teilweise offen und weist an diesem Ende eine Öffnung 61 auf. Die Stabilität des Zwischenelements 20 ist dennoch gegeben, da der seitlich auskragende Abschnitt 27 die beiden Längsseiten 62 und 63 miteinander verbindet. Durch die Öffnung 61 können Verschmutzungen aus der Kulissenbahn 28 abgefördert werden. Die Öffnung 61 ist vorteilhaft in üblicher Lage der Motorsäge 1 unten angeordnet, so dass Verschmutzungen auch aufgrund der Gewichtskraft nach unten abfallen können. Die Kulissenbahn 28 ist damit, wie insbesondere Fig. 14 zeigt, etwa U-förmig ausgebildet. Dies ist auch in Fig. 17 erkennbar. In Fig. 17 ist auch die Abflachung 57 am Lagerzapfen 47 gezeigt, die zwischen einem Grundkörper 76 des Zwischenelements 20 und dem Kopf 67 ausgebildet ist. Der Grundkörper 76 ist am Lagerzapfen 47 ebenfalls mit größerer Erstreckung quer zur Schwenkachse 25 ausgebildet als der Lagerzapfen 47 (Fig. 15). Das Zwischenelement 20 kann dadurch nicht in Richtung der Schwenkachse 25 vom Betätigungselement 15 demontiert oder am Betätigungselement 15 montiert werden. Der Grundkörper 76 ist der Bereich des Zwischenelements 20, an dem die Kulissenbahn 28 ausgebildet ist. Vom Grundkörper 76 ragt der seitlich auskragende Abschnitt 27 weg. Der Grundkörper 76 ist näherungsweise haarnadelförmig ausgeführt, wie Fig. 14 zeigt. Auch eine andere Gestaltung kann jedoch vorteilhaft sein. Der Lagerzapfen 47 und der seitlich auskragende Abschnitt 27 kragen dabei auf die gleiche Seite des Grundkörpers 76, wie Fig. 13 zeigt.

## Patentansprüche

1. Handgeführtes Arbeitsgerät mit einem Antriebsmotor (10), mit einem von dem Antriebsmotor (10) angetriebenen Werkzeug, und mit mindestens einem Handgriff (3), der über einen Schwingspalt (9) schwingungsdämpfend mit dem Antriebsmotor (10) in Wirkverbindung steht, wobei an dem Handgriff (3) eine Betätigungsvorrichtung für ein Drosselelement (23) des Antriebsmotors (10) angeordnet ist, wobei das Drosselelement (23) um eine Drehachse (24) in einem Gehäuse (30) schwenkbar gelagert ist, wobei die Betätigungsvorrichtung mit dem Drosselelement (23) über ein Koppelelement (17) in Wirkverbindung steht, wobei das Koppelelement (17) den Schwingspalt (9) überbrückt und die Betätigungsbewegung der Betätigungsvorrichtung als Rotation um eine quer zum Schwingspalt (9) liegende Rotationsachse (22) überträgt, wobei mit dem Drosselelement (23) ein Betätigungselement (15) verbunden ist, wobei das Koppelelement (17) auf ein an dem Betätigungselement (15) um eine Schwenkachse (25) schwenkbar gelagertes Zwischenelement (20) wirkt, wobei das Koppelelement (17) über mindestens einen Teil der Betätigungsbewegung der Betätigungsvorrichtung an einem Kontaktbereich (21) des Zwischenelements (20) anliegt,
**dadurch gekennzeichnet, dass** eine Führung (26) für das Zwischenelement (20) vorgesehen ist, die die Lage des Kontaktbereichs (21) gegenüber dem Gehäuse (30) in Abhängigkeit der Drehstellung des Betätigungselements (15) durch eine Änderung der Schwenklage des Zwischenelements (20) gegenüber dem Gehäuse (30) ändert.

2. Arbeitsgerät nach Anspruch 1,
**dadurch gekennzeichnet, dass** die Führung (26) jeder Position der Schwenkachse (25) des Zwischenelements (20) am Betätigungselement (15) eine Drehlage des Zwischenelements (20) um seine Schwenkachse (25) zuordnet.

3. Arbeitsgerät nach Anspruch 1 oder 2,
**dadurch gekennzeichnet, dass** das Zwischenelement (20) einen seitlich auskragenden Abschnitt (27) aufweist, wobei das Koppelement (17) an der der Schwenkachse (25) des Zwischenelements (20) zugewandten Seite des seitlich auskragenden Abschnitts (27) anliegt.

4. Arbeitsgerät nach einem der Ansprüche 1 bis 3,
**dadurch gekennzeichnet, dass** das Drosselelement (23) um die Drehachse (24) zwischen einer ersten Endstellung (51) und einer zweiten Endstellung (52) schwenkbar gelagert ist.

5. Arbeitsgerät nach Anspruch 4,
**dadurch gekennzeichnet, dass** das Koppelelement (17) an einem fest mit dem Gehäuse (30) des Drosselelements (23) verbundenen Drehlager (48) drehbar gelagert ist.

6. Arbeitsgerät nach Anspruch 4 oder 5,
**dadurch gekennzeichnet, dass** die Führung (26) eine Kulissenführung ist, die eine Kulissenbahn (28) und einen in der Kulissenbahn (28) geführten Kulissenzapfen (29) umfasst.

7. Arbeitsgerät nach Anspruch 6,
**dadurch gekennzeichnet, dass** der Kulissenzapfen (29) in mindestens einer Endstellung (51, 52) des Drosselelements (23) zum zugeordneten Ende (59) der Kulissenbahn (28) einen Abstand (d) aufweist.

8. Arbeitsgerät nach Anspruch 6 oder 7,
**dadurch gekennzeichnet, dass** der Kulissenzapfen (29) einen Sicherungsabschnitt (31) aufweist, der die Kulissenbahn (28) an einer ersten Längsseite (62) der Kulissenbahn (28) hintergreift und die Kulissenbahn (28) in Richtung der Schwenkachse (25) des Zwischenelements (20) an dem Kulissenzapfen (29) sichert.

9. Arbeitsgerät nach Anspruch 8,
**dadurch gekennzeichnet, dass** der Sicherungsabschnitt (31) eine erste, lange Seite (32) besitzt, deren Länge (e) größer als die Breite (c) der Kulissenbahn (28) ist und eine zweite, kurze Seite (34), deren Länge (f) kleiner als die Breite (c) der Kulissenbahn (28) ist, und dass die zweite Seite (34) in keiner Stellung des Zwischenelements (20) zwischen der ersten Endstellung (51) und der zweiten Endstellung (52) senkrecht zur Längsrichtung der Kulissenbahn (28) ausgerichtet ist.

10. Arbeitsgerät nach Anspruch 8 oder 9,
**dadurch gekennzeichnet, dass** die Kulissenbahn (28) eine zweite Längsseite (63) besitzt und dass benachbart zur zweiten Längsseite (63) eine Erhebung (64) an der Kulissenbahn (28) angeordnet ist.

11. Arbeitsgerät nach einem der Ansprüche 6 bis 10,
**dadurch gekennzeichnet, dass** der Kulissenzapfen (29) an einer Berührlinie an der Kulissenbahn (28) anliegt.

12. Arbeitsgerät nach einem der Ansprüche 6 bis 11,
**dadurch gekennzeichnet, dass** das Zwischenelement (20) nur in der Lage am Betätigungselement (15) einhängbar ist, die der zweiten Endstellung (52) des Drosselelements (23) zugeordnet ist, wobei die zweite Endstellung (52) die vollständig geöffnete Stellung des Drosselelements (23) ist.

13. Arbeitsgerät nach einem der Ansprüche 6 bis 12,
**dadurch gekennzeichnet, dass** die erste Endstellung (51) des Drosselelements (23) eine geschlossene Stellung des Drosselelements (23) ist und dass das Zwischenelement (20) eine Sperrkontur (56) besitzt, die in der ersten Endstellung (51) des Drosselelements (23) mit dem Betätigungselement (15) zusammenwirkt und eine Bewegung des Zwischenelements (20) in Richtung vom Kontaktbereich (21) auf die Schwenkachse (25) des Zwischenelements (20) begrenzt.

## Claims

1. Hand-guided working implement with a drive motor (10) and a tool driven by the drive motor (10) and with at least one handle (3) operatively connected to the drive motor (10) in a vibration-damping manner via a vibration gap (9), wherein an actuating device for a throttle element (23) of the drive motor (10) is located on the handle (3), wherein the throttle element (23) is bearing-mounted in a housing (30) for pivoting about an axis of rotation (24), wherein the actuating device is operatively connected to the throttle element (23) via a coupling element (17), wherein the coupling element (17) bridges the vibration gap (9) and transmits the actuating movement of the actuating device as a rotation about a rotational axis (22) extending transversely to the vibration gap (9), wherein an actuating element (15) is connected to the throttle element (23), wherein the coupling element (17) acts on an intermediate element (20) bearing-mounted on the actuating element (15) for pivoting about an axis of rotation (25), wherein the coupling element (17) bears against a contact region (21) of the intermediate element (20) along at least a part of the actuating movement of the actuating device,
**characterised in that** a guide (26) is provided for the intermediate element (20), which guide (26) changes the position of the contact region (21) relative to the housing (30) as a function of the rotary position of the actuating element (15) by changing the pivoting position of the intermediate element (20) relative to the housing (30).

2. Working implement according to claim 1,
**characterised in that** the guide (26) assigns to each position of the pivot axis (25) of the intermediate element (20) on the actuating element (15) a rotary position of the intermediate element (20) about its pivot axis (25).

3. Working implement according to claim 1 or 2,
**characterised in that** the intermediate element (20) has a laterally projecting section (27), wherein the coupling element (17) bears against that side of the laterally projecting section (27) which faces the pivot axis (25) of the intermediate element (20).

4. Working implement according to any of claims 1 to 3,
**characterised in that** the throttle element (23) is bearing-mounted about the axis of rotation (24) between a first end position (51) and a second end position (52).

5. Working implement according to claim 4,
**characterised in that** the coupling element (17) is rotatably mounted on a rotary bearing (48) permanently joined to the housing (30) of the throttle element (23).

6. Working implement according to claim 4 or 5,
**characterised in that** the guide (26) is a gate guide comprising a gate track (28) and a gate pin (29) guided in the gate track (28).

7. Working implement according to claim 6,
**characterised in that** the gate pin (29) has a distance (d) from the associated end of the gate track (28) in an at least one end position (51, 52) of the throttle element (23).

8. Working implement according to claim 6 or 7,
**characterised in that** the gate pin (29) has a securing section (31), which engages the gate track (28) from behind on a first long side (62) of the gate track (28) and secures the gate track (28) to the gate pin (29) in the direction of the pivot axis (25) of the intermediate element (20).

9. Working implement according to claim 8,
**characterised in that** the securing section (31) has a first, long side (32), the length (e) of which is greater than the width (c) of the gate track (28), and a second, short side (34), the length (f) of which is less than the width (c) of the gate track (28), and **in that** the second side (34) is not oriented perpendicularly to the longitudinal direction of the gate track (28) in any position of the intermediate element (20) between the first end position (51) and the second end position (52).

10. Working implement according to claim 8 or 9,
**characterised in that** the gate track (28) has a second long side (63), and **in that** a raised area (64) is located on the gate track (28) adjacent to the long side (63).

11. Working implement according to any of claims 6 to 10,
**characterised in that** the gate pin (29) bears against a contact line on the gate track (28).

12. Working implement according to any of claims 6 to 11,
**characterised in that** the intermediate element (20) can only be suspended on the actuating element (15) **in that** position which is assigned to the second end position (52) of the throttle element (23), the second end position (52) being the fully open position of the throttle element (23).

13. Working implement according to any of claims 6 to 12,
**characterised in that** the first end position (51) of the throttle element (23) is a closed position of the throttle element (23), and **in that** the intermediate element (20) has a locking contour (56), which acts together with the actuating element (15) in the first end position (51) of the throttle element (23) and limits a movement of the actuating element (15) in the direction away from the contact region (21) towards the pivot axis (25) of the intermediate element (20).

## Revendications

1. Appareil de travail à main avec un moteur d'entraînement (10), avec un outil entraîné par le moteur d'entraînement (10), et avec au moins une poignée (3) qui est en relation fonctionnelle avec le moteur d'entraînement (10) avec un amortissement des vibrations par l'intermédiaire d'un interstice antivibrations (9), dans lequel un dispositif d'actionnement pour un élément d'étranglement (23) du moteur d'entraînement (10) est disposé sur la poignée (3), dans lequel l'élément d'étranglement (23) est monté pivotant autour d'un axe de rotation (24) dans un boîtier (30), dans lequel le dispositif d'actionnement est en relation fonctionnelle avec l'élément d'étranglement (23) par l'intermédiaire d'un élément de couplage (17), dans lequel l'élément de couplage (17) traverse l'interstice antivibrations (9) et transmet le mouvement d'actionnement du dispositif d'actionnement sous la forme d'une rotation autour d'un axe de rotation (22) transverse à l'interstice antivibrations (9), dans lequel un élément d'actionnement (15) est relié à l'élément d'étranglement (23), dans lequel l'élément de couplage (17) agit sur un élément intermédiaire (20) monté pivotant autour d'un axe de pivotement (25) sur l'élément d'actionnement (15), dans lequel l'élément de couplage (17), sur une partie au moins du mouvement d'actionnement du dispositif d'actionnement, est appliqué contre une zone de contact (21) de l'élément intermédiaire (20),
**caractérisé en ce qu'**il est prévu un guide (26) pour l'élément intermédiaire (20), qui modifie la position de la zone de contact (21) par rapport au boîtier (30) en fonction de la position de rotation de l'élément d'actionnement (15) en modifiant la position de pivotement de l'élément intermédiaire (20) par rapport au boîtier (30).

2. Appareil de travail selon la revendication 1,
**caractérisé en ce que** le guide (26) associe à chaque position de l'axe de pivotement (25) de l'élément intermédiaire (20) sur l'élément d'actionnement (15) une position de rotation de l'élément intermédiaire (20) autour de son axe de pivotement (25).

3. Appareil de travail selon la revendication 1 ou 2,
**caractérisé en ce que** l'élément intermédiaire (20) comporte une section saillant latéralement (27), dans lequel l'élément de couplage (17) est appliqué contre le côté de la section saillant latéralement (27) tourné vers l'axe de pivotement (25) de l'élément intermédiaire (20).

4. Appareil de travail selon l'une des revendications 1 à 3,
**caractérisé en ce que** l'élément d'étranglement (23) est monté pivotant autour de l'axe de rotation (24) entre une première position de fin de course (51) et une deuxième position de fin de course (52).

5. Appareil de travail selon la revendication 4,
**caractérisé en ce que** l'élément de couplage (17) est monté à rotation sur un palier de rotation (48) relié de manière fixe au boîtier (30) de l'élément d'étranglement (23).

6. Appareil de travail selon la revendication 4 ou 5,
**caractérisé en ce que** le guide (26) comprend un guide à coulisse qui comprend une coulisse (28) et un coulisseau (29) guidé dans la coulisse (28).

7. Appareil de travail selon la revendication 6,
**caractérisé en ce que** le coulisseau (29), dans au moins une position de fin de course (51, 52) de l'élément d'étranglement (23), présente par rapport à l'extrémité associée (59) de la coulisse (28) un écartement (d).

8. Appareil de travail selon la revendication 6 ou 7,
**caractérisé en ce que** le coulisseau (29) comporte une section d'arrêt (31) qui vient en prise derrière la coulisse (28) sur un premier côté longitudinal (62) de la coulisse (28) et arrête ladite coulisse (28) dans la direction de l'axe de pivotement (25) de l'élément intermédiaire sur le coulisseau (29).

9. Appareil de travail selon la revendication 8,
**caractérisé en ce que** la section de blocage (31) a un premier côté (32), long, dont la longueur (e) est supérieure à la largeur (c) de la coulisse (28) et un deuxième côté (34), court, dont la longueur (f) est inférieure à la largeur (c) de la coulisse (28), et **en ce que** le deuxième côté (34) n'est orienté perpendiculairement à la direction longitudinale de la coulisse (28) dans aucune position de l'élément intermédiaire (20) entre la première position de fin de course (51) et la deuxième position de fin de course (52).

10. Appareil de travail selon la revendication 8 ou 9,
**caractérisé en ce que** la coulisse (28) a un deuxième côté longitudinal (63) et **en ce que** près du deuxième côté longitudinal (63), un renflement (64) est disposé sur la coulisse (28).

11. Appareil de travail selon l'une des revendications 6 à 10,
**caractérisé en ce que** le coulisseau (29) est appliqué contre la coulisse (28) sur une ligne de contact.

12. Appareil de travail selon l'une des revendications 6 à 11,
**caractérisé en ce que** l'élément intermédiaire (20) ne peut être accroché sur l'élément d'actionnement (15) que dans la position qui est associée à la deuxième position de fin de course (52) de l'élément d'étranglement (23), dans lequel la deuxième position de fin de course (52) est la position complètement ouverte de l'élément d'étranglement (23).

13. Appareil de travail selon l'une des revendications 6 à 12,
**caractérisé en ce que** la première position de fin de course (51) de l'élément d'étranglement (23) est une position fermée de l'élément d'étranglement (23), et **en ce que** l'élément intermédiaire (20) présente un contour de blocage (56) qui, dans la première position de fin de course (51) de l'élément d'étranglement (23), coopère avec l'élément d'actionnement (15) et limite un mouvement de l'élément intermédiaire (20) dans la direction allant de la zone de contact (21) vers l'axe de pivotement (25) de l'élément intermédiaire (20).
